# EUROPÄISCHE PATENTSCHRIFT

(11) **EP 0 529 106 B1**
(45) Veröffentlichungstag und Bekanntmachung des Hinweises auf die Patenterteilung: **25.10.1995**
(21) Anmeldenummer: 91112040.0
(22) Anmeldetag: 18.07.1991
(51) Int. Cl.: B29C 51/42

(54) **Verfahren und Vorrichtung zum Thermoverformen von Kunststoff aufweisenden Substraten**
Method and apparatus for thermoforming of plastic substrates
Procédé et dispositif pour thermoformage de substrats en matière plastique

(43) Veröffentlichungstag der Anmeldung: 03.03.1993
(73) Patentinhaber: Erich Netzsch GmbH & Co. Holding KG, D-95100 Selb (DE)
(72) Erfinder: Fuchs, Gerhard, W-8672 Selb (DE)
(74) Vertreter: von Hellfeld, Axel, Dr. Dipl.-Phys.

(56) Entgegenhaltungen:
- WO-A-89/07530
- DE-A- 2 508 982
- GB-A- 569 813

## Beschreibung

Die Erfindung betrifft eine Vorrichtung und ein Verfahren zum Thermoverformen von Kunststoff aufweisenden Substraten. Insbesondere betrifft die Erfindung auch eine Vorrichtung zum Thermoverformen von thermoplastischen Substraten oder Substraten, die zumindest als wesentlichen Anteil ein Thermoplast enthalten. Solche thermoplastischen Materialien gewinnen insbesondere wegen ihrer günstigen Recycling-Eigenschaften zunehmend an Bedeutung.

Die Anwendungsmöglichkeiten solcher thermoplastischen Substrate können erheblich erweitert werden, wenn ein geeignetes Verfahren zur Verfügung steht, die Oberflächen solcher Substrate in ästhetisch befriedigender Weise mit farbigen Dekors zu versehen oder die Substrate auch insgesamt farblich ansprechend zu gestalten.

Aus der nicht vorveröffentlichten EP-A-455 849 sind ein Verfahren und eine Vorrichtung zum Auf- und Einbringen von Farbstoffen auf bzw. in ein Kunststoff aufweisendes Substrat bekannt, bei denen der Farbträger auf seiner vom Substrat abgekehrten Seite in Abhängigkeit vom Kunststoff des Substrates auf Temperaturen unterhalb von 170°C erhitzt wird, der Farbträger durch elektrostatische Aufladung in ganzflächigen Kontakt mit dem Substrat gebracht wird und das Substrat erhitzt wird und zwar so, daß die Seite des Substrats, auf welche die Farbstoffe auf- bzw. eingebracht werden, geringer erhitzt wird als die gegenüberliegende andere Seite (Rückseite) des Substrates. Die vorliegende Erfindung wird bevorzugt mit farbig bedruckten Substraten gemäß der EP-A-455 849 angewandt. Bei der Thermoverformung von farbig dekorierten Substraten (welche also zunächst typischerweise plattenförmig sind) besteht das Problem, daß bei der Thermoverformung eine Verzerrung des Dekors auftreten kann.

Aus der GB-A-569 813 ist eine Vorrichtung gemäß dem Oberbegriff des Anspruchs 3 bekannt. Die bekannte Vorrichtung ist mit dem Ziel geschaffen worden, durch Thermoverformung plattenförmiger thermoplastischer Substrate dreidimensionale Gegenstände mit gleichmäßiger Materialdicke herzustellen. Hierzu sind eine Vielzahl von Infrarot-Strahlern vorhanden, die gegenüber der Form angeordnet sind und die von der Form abgewandte Seite des Substrates bestrahlen. Durch Versuche wird ermittelt, welche der Vielzahl von Infrarot-Strahlern beim Erhitzen des Substrates angeschaltet und welche ausgeschaltet sein müssen, damit der gewünschte dreidimensionale Gegenstand nach der Thermoverformung einer gleichmäßige Wanddicke aufweist.

Aus der DE-A-25 08 982 ist eine Vorrichtung und ein Verfahren zur Herstellung tiefgezogener Werkstücke aus thermoplastischer Kunststoffolie bekannt. Zur Sicherstellung einer schnellen und gleichmäßigen Erwärmung der zu verformenden Kunststoffolie wird letzere mit Hilfe von Infrarot-Strahlern beidseitig erhitzt. Die Erwärmung erfolgt dabei in zwei Stufen: Zunächst wird die gesamte Kunststoffolie auf eine unterhalb der Verformungstemperatur liegende Temperatur vorgewärmt. Steht die Verformung kurz bevor, wird wiederum die gesamte Kunststoffolie durch eine Erhöhung der Strahlungsleistung aller Infrarot-Strahler auf die zum Verformen notwendige Endtemperatur gebracht. Anschließend wird die so erhitzte Kunststoffolie aus dem Strahlungsbereich der Infrarot-Strahler wegbewegt und zu der Form gebracht, in der die Kunststoffolie durch Tiefziehen verformt wird.

Die vorliegende Erfindung hat das Ziel, eine Vorrichtung und ein Verfahren zu schaffen, mit der bzw. mit dem eine einwandfreie und ästhetisch ansprechende Thermoverformung von Kunststoff aufweisenden, einseitig farbig dekorierten Substraten ermöglicht ist.

Dieses Ziel ist erfindungsgemäß mit einer Vorrichtung erreicht, die die im Anspruch 3 genannten Merkmale aufweist. Ein erfindungsgemäßes Verfahren ist im Anspruch 1 angegeben.

Ausgestaltungen und vorteilhafte Weiterbildungen der erfindungsgemäßen Vorrichtung bzw. des erfindungsgemäßen Verfahrens sind in den Unteransprüchen genannt.

Nachfolgend soll zunächst ein Transferdruckverfahren beschrieben werden, welches der nicht vorveröffentlichten EP-A-455 849 entspricht. Mit diesem Transferdruckverfahren können thermoplastische Substrate bedruckt und dekoriert werden. Die erfindungsgemäße Vorrichtung wird bevorzugt zur Thermoverformung derart bedruckter Substrate verwendet und wird anschließend beschrieben.

Es zeigt:
- Fig. 1: in Drauf- und Seitenansicht die Vorbereitung eines Substrates und eines Farbträgers für den Transferdruck;
- Fig. 2 und 3: schematische Ansichten des Transferdruckes;
- Fig. 4: Einzelheiten des Transferdruckes in stark vergrößertem Maßstab,
- Fig. 5: eine Farbverteilung eines zu druckenden Bildes und eine zugehörige Steuerung der Intensität von Infrarot-Strahlern und
- Fig. 6: schematisch eine Ansicht einer Vorrichtung zum Thermoverformen eines Substrates, das entsprechend den Fig.1 bis 5 dekoriert worden ist.

Ein Substrat 10 soll durch Transferdruck mit einem Bild aus sublimierbaren Dispersionsfarbstoffen dekoriert werden. Der Begriff Substrat soll insbesondere erfassen Filme, Folien oder Platten, wobei die Filme oder Folien Stärken von 25 bis 1 000 Mikron und die Platten Stärken von 1 bis 10 mm aufweisen können. Die Filme, Folien oder Platten können aus einem Kunststoffgranulat, Granulatmischungen sowie aus mehreren Kunststoffarten oder Mischungen extrudiert sein. Auch können anorganische Teilchen (Puder, Mehl) zugemischt sein, wobei der Anteil an Kunststoffen an der Oberfläche des Substrates bevorzugt mehr als 50 % betragen soll. In Betracht für die Anwendung der Erfindung kommen insbesondere folgende Kunststoffe: PC (Polycarbonate), ABS, PMMA, PET und PDT. In Abhängigkeit vom verwendeten Material werden die Prozeßparameter eingestellt (siehe unten).

Die Kunststoffilme, -platten oder -folien können auch aus mehreren Kunststoffarten und -schichten zusammengesetzt sein.

Das erfindungsgemäße Verfahren ist nicht nur für Substrat-Oberflächen geeignet, die glatt sind, sondern auch für strukturierte, poröse, matte und rauhe Oberflächen. Das Substrat-Material kann klar oder gefärbt sein.

Unter einem Substrat ist auch eine Kunststoffschicht zu verstehen, die in Form von Lack auf eine Werkstoffoberfläche von z.B. Holz, Keramik oder Kunststein aufgetragen ist, ggf. unter Vernetzung.

Werden empfindliche oder in bezug auf chemische und mechanische Beanspruchungen oder in bezug auf Licht weniger beständige Kunststoffe verwendet, so können diese nach einer erfindungsgemäßen Bedruckung mit als solches bekannten beständigeren Lacken oder Beschichtungen aus anderen Kunststoffarten überzogen werden.

Das Substrat 10 wird mit Hilfe eines Farbträgers 12 farbig bedruckt. Auf dem Farbträger 12 ist hierzu das auf das Substrat zu übertragende Bild mit Hilfe von sublimierbaren Dispersionsfarbstoffen aufgedruckt. Als Farbträger 12 kommen insbesondere Papierbögen in Betracht, die einerseits das zu übertragende Bild aus sublimierbaren Farben gut aufnehmen und andererseits eine hinreichende Luftdurchlässigkeit aufweisen, damit während des Sublimations-Umdruckes Luft durch den Farbträger 12 gesaugt werden kann. Gute Ergebnisse werden mit Papiergewichten von 30 bis 120 g erzielt. Die Papierflächen können beliebige Größen haben, insbesondere können sie 1 m² oder größer sein.

Sublimierbare Dispersionsfarbstoffe herkömmlicher Art werden unter Verwendung von Bindemitteln und ggf. Oxidationsadditiven zu Drucktinten verarbeitet. Mittels Offset-, Rotations-, Tief-, Flexo- oder Siebdruckverfahren werden die Bilder, Muster, Einzelfarben oder Motive, mit denen das Substrat 10 versehen werden soll, auf den Farbträger 12 gedruckt.

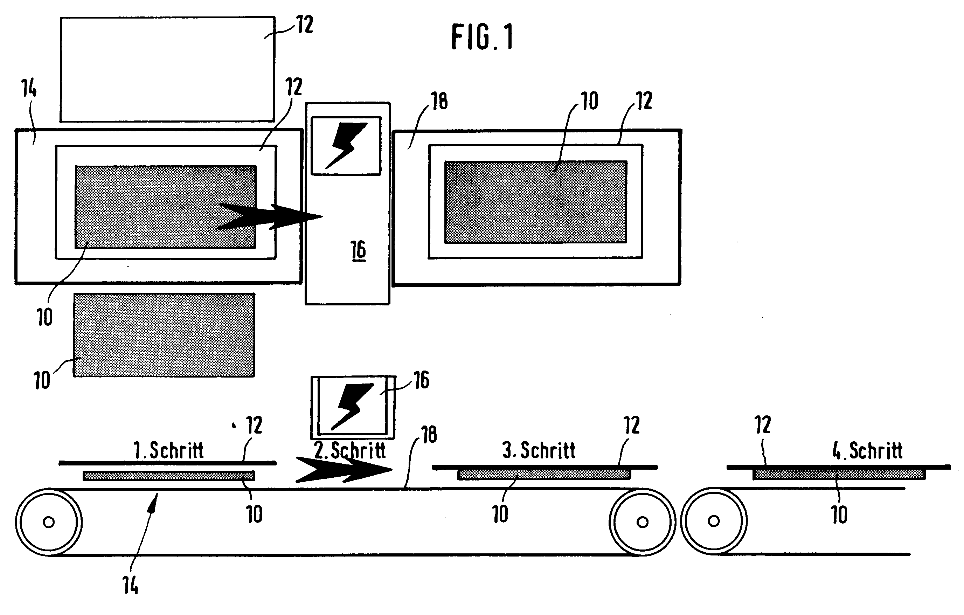

Gemäß Fig.1 wird das Substrat 10, welches bedruckt werden soll, in einer Beschickungsstation 14 abgelegt und es wird ein Farbträger 12 auf das Substrat gelegt. Wie dargestellt, ist der bedruckte Farbträger 12 aus Papier wesentlich größer als das Substrat 10, so daß der Farbträger das Substrat an allen Kanten deutlich überlappt. Die überlappende Fläche beträgt beim dargestellten Ausführungsbeispiel mindestens 20 %, vorzugsweise mindestens 30 %.

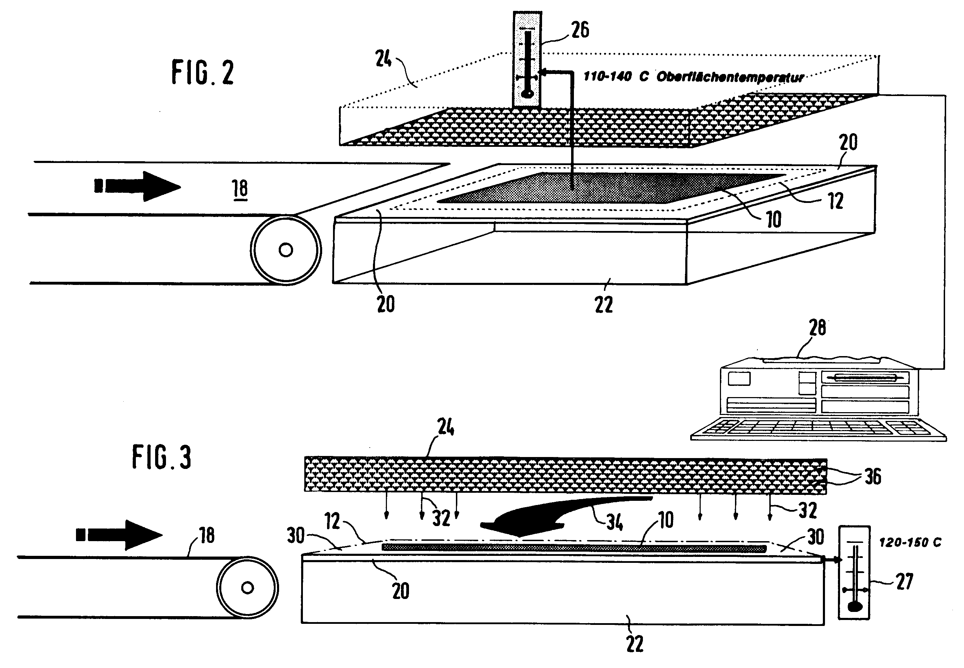

Die so in einem ersten Schritt übereinander gelegten Substrat- und Farbträgerschichten werden in einem zweiten Schritt in eine Station 16 für eine elektrostatische Aufladung überführt. Hier wird das Substrat 10 gegenüber dem Farbträger 12 so elektrostatisch aufgeladen, daß der Farbträger 12 ganzflächig satt an der Oberfläche des Substrates 10 anliegt. Dies wird im dritten Schritt gemäß Fig.1 erreicht. Im vierten Schritt wird die Anordnung aus Substrat 10 und wie geklebt daran anliegendem Farbträger 12 zu einer Sublimationsstation befördert, die in Fig.2 näher dargestellt ist.

Ein Transportband 18 überträgt die wie vorstehend beschrieben erzeugte Anordnung aus Substrat 10 und Farbträger 12 zu einem Tisch 20 mit einer Heizplatte, die mit luftdurchlässigen vertikalen Kanälen (nicht gezeigt) versehen ist, so daß Luft in den Figuren von oben nach unten durch die Tischplatte saugbar ist. Hierzu ist unter der Tischplatte eine Vakuumkammer 22 vorgesehen, die an eine nicht gezeigte Vakuumpumpe angeschlossen ist.

Gemäß den Fig.2 und 3 wird das Substrat 10 mit darauf fest anliegendem Farbträger 12 auf den Tisch 20 befördert und danach wird Vakuum in der Kammer 22 angelegt. Es ist weder eine Deckfolie über dem Farbträger 12 noch eine Unterlage zwischen dem Substrat 10 und dem Tisch 20 erforderlich.

Über dem Tisch 20 ist ein Gehäuse 24 angeordnet, in dem eine Vielzahl von Infrarot-Strahlern 36 nebeneinander untergebracht sind. Das Gehäuse 24 mit den Infrarot-Strahlern 36 überdeckt überlappend den gesamten Bereich des Substrates 10 und des Farbträgers 12. Eine Temperaturmeßeinrichtung 26 mißt die Temperatur an der den Infrarot-Strahlern zugekehrten Oberfläche des Substrates 10 und der daran anliegenden Seite des Farbträgers 12 mit den sublimierbaren Dispersionsfarben. Eine weitere Temperatureinrichtung 27 mißt die Temperatur der Heizplatte des Tisches 20 und damit die Temperatur an der Oberfläche des Substrates 10, die direkt an dem Tisch 20 anliegt, also diejenige Seite des Substrates 10, die nicht dekoriert wird.

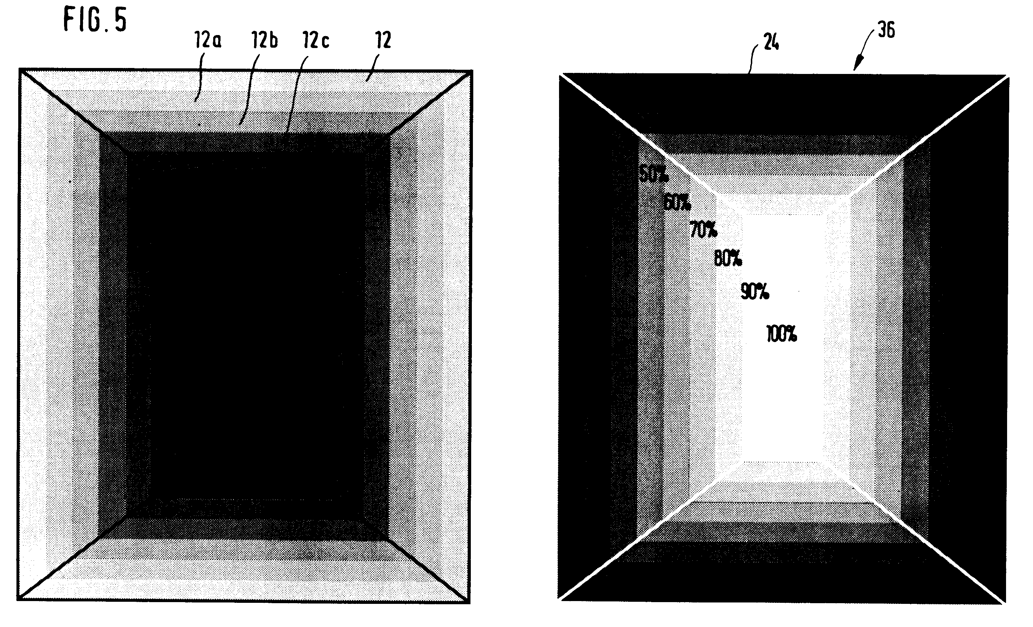

Mittels einer Steuerung 28 werden die einzelnen Infrarot-Strahler 36 im Gehäuse 24 auf unterschiedliche Temperaturen gesteuert, wie weiter unten anhand der Fig.5 näher erläutert wird.

Wie in Fig.3 schematisch dargestellt ist, wird durch den porösen Farbträger 12 Luft in die Vakuumkammer 22 gesaugt, und zwar durch die Kanäle (nicht gezeigt) in der geheizten Tischplatte 20. Dabei wird der Randraum 30 zwischen dem überlappenden Farbträger 12, dem Substrat 10 und dem Tisch 20 luftleer gepumpt, so daß sich der Farbträger 12 gleichmäßig über die gesamte Fläche an das Substrat 10 anzieht. Es entstehen keine Faltungen oder Verwerfungen im Farbträger 12 und Luft- oder Gasblasen werden entfernt. Dies gilt insbesondere für die Erhitzung während der Sublimation unter Dampfbildung.

In diesem Zustand werden der Tisch 20 und die Infrarot-Strahler 36 geheizt. Die von den Infrarot-Strahlern 36 erzeugte Infrarotstrahlung 32 dient zur Erhitzung der auf der Unterseite des Farbträgers 12 angeordneten sublimierbaren Farbstoffe, während die Erhitzung des Tisches 20 dazu dient, das Substrat 10 auf der nicht bedruckten Seite zu erhitzen. Diese Erhitzung des Substrates 10 hat nicht nur den Zweck, eine Formstabilität des Substrates zu erreichen, sondern hat darüberhinaus wesentliche Auswirkungen auf das Eindringen der Farbmoleküle in das Substrat 10.

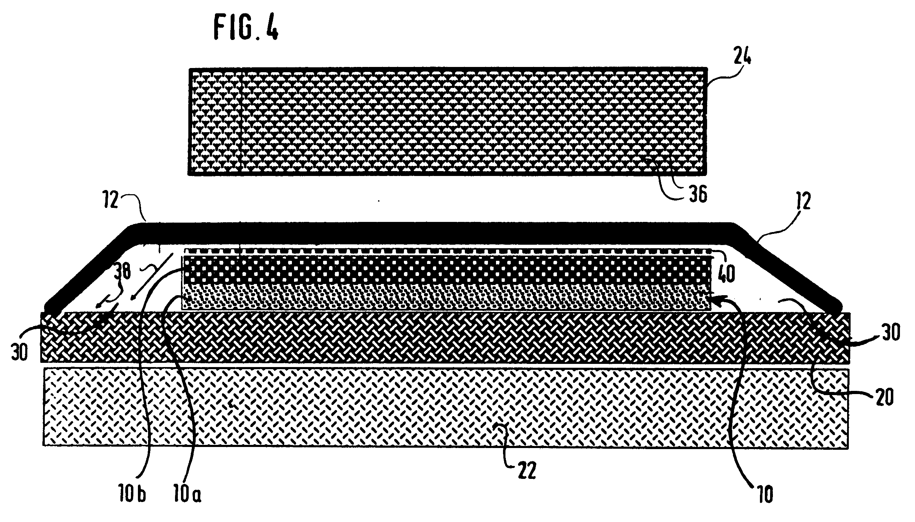

Dies ist in Fig.4 näher erläutert, wo die einzelnen Teile in stark verzerrter Vergrößerung dargestellt sind, um den Vorgang der Sublimation und des Eindringens der Farbmoleküle in das Substrat zu veranschaulichen. Wie gesagt, erzeugt die Luftströmung 34 von außen durch den Farbträger 12 und die Luftströmung 38 unterhalb des Farbträgers 12 ein gleichmäßiges, spannungsfreies, blasenfreies und sattes Anlegen des Farbträgers 12 am Substrat 10. Zur Erzielung eines besonders migrationsbeständigen Druckes auf dem Substrat 10 wird nun das Substrat 10 mit der Tischplatte 20 auf eine Temperatur geheizt, die höher ist als die Temperatur an der zu bedruckenden Oberfläche des Substrates 10. In Fig.4 entsteht also von oben nach unten ein ansteigender Temperaturgradient. Dieser Temperaturgradient hat zur Folge, daß die Farbstoffmoleküle 40 nach der Sublimation relativ weit in das Substrat eindringen. In Fig.4 ist derjenige Bereich des Substrates 10, in den die Moleküle 40 eindringen, mit 10b bezeichnet, während der im wesentlichen von Farbstoffmolekülen freibleibende Bereich mit 10a gekennzeichnet ist.

Das Maß der Erwärmung an der Oberfläche des Substrates 10 und entsprechend an der Unterfläche des Farbträgers 12 (gemessen mit der Temperaturmeßeinrichtung 26 gemäß Fig.2) hängt vom Material des Substrates 10 ab. Die Erwärmung beträgt zwischen 60°C (für z.B. ABS) und 150°C (für z.B. PBT). Für PC hat sich eine Erwärmung auf 130°C als günstig erwiesen. Die Temperatur an der Unterfläche des Substrates 10 (gemessen mit dem Temperaturfühler 27 gemäß Fig.3) soll jeweils um etwa 3 bis 30°C, insbesondere 5 bis 15°C höher liegen, je nach Art und Stärke des Materials.

Im einzelnen haben sich für PC Temperaturwerte von 120 bis 135°C im Sublimationsbereich (d.h. an der Träger-Unterfläche und der Substrat-Oberfläche) als günstig erwiesen, für ABS 90 bis 100°C, für PBT 150 bis 160°C und für PET 80 bis 90°C.

Durch die erfindungsgemäß angewandten relativ geringen Temperaturen ist das Problem der Rück-Sublimation gelöst.

Je nach Dicke des Substrates 10 und seinem Material ist der Sublimationsvorgang in 10 bis 30 Sekunden beendet.

Die Qualität des erzeugten Produktes läßt sich weiter dadurch steigern, daß die Intensität der einzelnen Infrarot-Strahler 36 in Abhängigkeit davon gesteuert wird, welche Farbe durch den betreffenden Strahler sublimiert werden soll. Unterschiedliche Farben erfordern unterschiedliche Energien pro Flächeneinheit für die Sublimation. So steigt der Energiebedarf (und entsprechend die von der Infrarotstrahlung zu erzeugende Temperatur) von gelb über rot und cyan zu schwarz um etwa 20 % an. Dies wird durch individuelle Steuerung der einzelnen Infrarot-Strahler entsprechend dem vorherrschenden Farbanteil direkt unter dem Strahler berücksichtigt. Hierdurch wird eine gleichmäßige Sublimation für alle Farben erreicht, wobei gleichzeitig die zu bedruckende Oberfläche des Substrates hinreichend gleichmäßig erwärmt ist, was die Bildqualität fördert. Fig.5 zeigt beispielhaft links ein abzudruckendes Bild auf dem Farbträger 12, wobei in den äußeren Bereichen 12a, 12b und 12c hellere Farben (zunehmend von gelb nach rot) vorgesehen sind, während das Bild zur Mitte hin immer dunkler wird, bis es im zentralen Abschnitt einen schwarzen Bereich aufweist. Entsprechend zeigt Fig.5 rechts schematisch eine Ansicht der Infrarot-Strahler 36 im Gehäuse 24 von unten (beispielsweise in bezug auf Fig.4), wobei im mittleren Bereich, entsprechend dem schwarzen Bereich des Bildes, 100 % einer vorgegebenen IR-Leistung mit den Infrarot-Strahlern erzeugt wird, während nach außen hin die Infrarotleistung jeweils wie angegeben reduziert wird.

Bevorzugt wird der Farbträger 12 auf seiner Rückseite geschwärzt.

Die mit dem vorstehend beschriebenen Verfahren erzielte Eindringtiefe der sublimierbaren Farbstoffmoleküle in das Substrat von 100 bis 300 Mikrometer verursacht keine Verblassung des Bildes sondern überraschenderweise im Gegenteil eine Verbesserung der Bildqualität; das Bild erscheint intensiver und räumlicher. Die Migration ist vernachlässigbar. Das wie beschrieben hergestellte Produkt kann ohne Beeinträchtigung der Bildqualität einer kurzfristigen Stoßerwärmung von z.B. 200 bis 300°C für 2 bis 3 min zwecks einer Thermoverformung unterzogen werden. Auch eine Dauererwärmung von 100 bis 200°C ist möglich (je nach Kunststoffart, z.B. 145°C für PC und 200°C für PBT).

Es erfolgt keine Beschädigung der Substratoberfläche. Die Kunststoffoberfläche behält ihre Struktur ohne jegliche Veränderung, unabhängig davon, ob die Oberfläche auf Hochglanz poliert, matt, seidenmatt, gekrümmt, grob oder fein strukturiert ist. Aufgrund der elektrostatischen Anziehungskräfte und der gleichzeitig wirkenden Vakuumkräfte ist auch die Bildqualität bei groben, rauhen und feinstrukturierten Oberflächen gut.

Mit dem beschriebenen Verfahren lassen sich relativ große Mengen von Farbstoff transferieren (10 bis 20 g naß, bzw. 3 bis 7 g trocken). Hierdurch und durch die beschriebene große Diffusionstiefe kann eine Thermoverformung bis zu 250 % Ausdehnung ohne Verblassung oder Aufhellung der Farben durchgeführt werden.

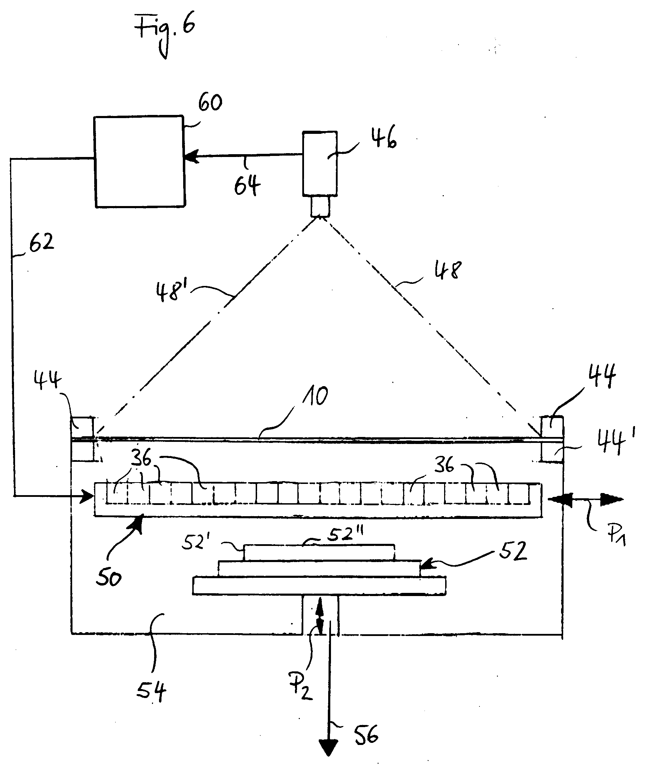

Fig.6 zeigt schematisch in einer Seitenansicht eine Vorrichtung zum Thermoverformen eines Substrates 10, welches wie vorstehend beschrieben mit Farbstoff versehen ist.

Das bedruckte Substrat 10 wird zwischen Klemmringen 44, 44' eingespannt. Oberhalb des Substrates 10 ist auf seiner bedruckten Seite, d.h. auf derjenigen Seite des Substrates, von welcher die Farbstoffmoleküle eingedrungen sind, eine Infrarotkamera 46 angeordnet. Solche Infrarotkameras, mit denen örtlich aufgelöste Temperaturverteilungen meßbar sind, sind bekannt (Thermovision-Kamera, z.B. Firma AGEMA). Eine Infrarotkamera ermöglicht die Messung der einzelnen Temperaturen in einem matrixartig aufgeteilten Feld. Der von der Infrarotkamera 46 erfaßte Bereich ist durch die Randstrahlen 48, 48' in Fig.6 angedeutet.

Entsprechend der örtlichen Auflösung der Temperaturmessung mittels der Infrarotkamera 46 ist somit die Oberfläche des Substrates 10 in eine Vielzahl von Segmenten aufgeteilt, für die jeweils die Temperatur gemessen wird.

In einer Kammer 54 ist eine Form 52 angeordnet, die gemäß dem Doppelpfeil P₂ bewegbar ist. Mittels einer Vakuumquelle, die durch den Pfeil 56 angedeutet ist, kann in der Form 52 ein Vakuum erzeugt werden. Die Oberfläche der Form 52 ist mit einer Vielzahl von Löchern (nicht gezeigt) versehen, durch die das Vakuum einen Saugeffekt ausübt.

Auf einem Schlitten 50 sind eine Vielzahl von Infrarot-Strahlern 36 matrixförmig angeordnet. Der Schlitten 50 mit den Infrarot-Strahlern 36 ist entsprechend dem Pfeil P₁ in die Kammer 54 (in die Fig.6 dargestellte Position) schiebbar und, je nach Betriebszustand der Vorrichtung, aus der Kammer entfernbar.

Der Betrieb der Vorrichtung gemäß Fig.6 ist wie folgt: In der in Fig.6 gezeigten Stellung des Schlittens 50 werden die Infrarot-Strahler 36 betrieben. Jeder einzelne der Infrarot-Strahler 36 bestrahlt ein zugeordnetes Segment auf der Unterseite des Substrates 10. Insgesamt decken die von den Infrarot-Strahlern 36 erzeugten Strahlungsfelder die gesamte Unterseite des Substrates 10 lückenlos und homogen ab. Die Strahlungsleistung jedes einzelnen Infrarot-Strahlers 36 wird mittels eines Rechners 60 gesteuert. Die Steuersignale des Rechners 60 werden über eine Leitung 62 zu den Infrarot-Strahlern 36 übertragen. Mittels der Steuersignale werden die Leistungen der einzelnen Infrarotstrahler gezielt entsprechend der Form 52 eingestellt. In Abhängigkeit von der Geometrie der durchzuführenden Thermoverformung werden bestimmte Bereiche des Substrates 10 stärker erhitzt als andere Bereiche. Zum Beispiel können die Bereiche der Form 52, in denen eine Stufe 52' auftritt, stärker erhitzt werden als solche Bereiche der Form 52, in denen die Thermoverformung geringer ist, wie beispielsweise die Fläche 52''.

Entsprechend der Form 52 wird somit im Rechner 60 der Vorrichtung ein Programm abgelegt, daß für jeden einzelnen Infrarot-Strahler 36 die gewünschte Strahlungsleistung steuert.

Mittels der Thermokamera 46 wird für jedes IR-bestrahlte Segment des Substrates 10 die erreichte Temperatur gemessen und die einzelnen Temperaturwerte werden über eine Leitung 64 in den Rechner 60 eingegeben. Mittels des Rechners 60 werden die gemessenen Ist-Werte der Temperaturen der einzelnen Segmente des Substrates 10 mit abgelegten Soll-Werten verglichen. Weichen die Ist-Werte unzulässig von den Soll-Werten ab, werden die entsprechenden Infrarot-Strahler 36 so betrieben, daß die Ist- und Soll-Werte der Temperaturen hinreichend übereinstimmen.

Mit der Infrarotkamera 46 sind außer den vorstehend beschriebenen Temperaturen auch die Entfernungen zwischen der Kamera und den einzelnen Stellen des Substrates 10 meßbar. Bei der Thermoverformung des Substrates 10 mittels der Form 52 ist der Schlitten 50 entsprechend dem Pfeil P₁ aus der Kammer 54 entfernt und die Form 52 wird entsprechend dem Pfeil P₂ aufwärts bewegt, so daß sie mit dem Substrat 10 in Eingriff kommt. Es wird Vakuum angelegt, so daß das Substrat an die Form 52 angedrückt wird. Dabei verformt sich das Substrat 10. Entsprechend der Verformung ändert sich auch der Abstand zwischen den einzelnen Stellen des Substrates 10 und der Thermokamera 46. Somit kann mittels der Thermokamera 46 die Verformung des Substrates 10 geometrisch überwacht werden. Bei der gewünschten Verformung ändern sich die Abstände zwischen Substrat 10 und Kamera 46 in bestimmter Weise und dann, wenn die Verformung nicht wie gewünscht eintritt (Fehler), weichen die mittels der Kamera gemessenen Abstände von den gewünschten Werten ab, so daß eine Fehlermeldung erfolgen kann. Der Rechner 60, in den die Abstandswerte für die einzelnen Segmente des Substrates 10 eingegeben werden, erkennt den Fehler und kann in zweifacher Weise auf die Steuerung der Vorrichtung einwirken: Zum einen kann das Vakuum, welches durch in der Form 52 ausgebildete Löcher (nicht gezeigt) wirksam ist und eine Druckdifferenz erzeugt, gemäß der das Substrat gegen die Form 52 gedrückt wird, verändert werden, um auch denjenigen Bereich des Substrates 10 wie gewünscht an die Form 52 anzudrücken, bezüglich dessen die Abstandsmessung eine unvollständige Verformung ergeben hat. Zum anderen kann die Vorrichtung, insbesondere wenn die vorstehend beschriebene Maßnahme hinsichtlich des Vakuums keinen Erfolg gebracht hat, so gesteuert werden, daß der Schlitten 50 noch einmal in die Kammer 54 gefahren wird, um eine nochmalige Heizung des Substrates 10 durchzuführen, insbesondere an der kritischen Stelle, an der die Verformung unvollständig war.

Durch die vorstehend beschriebenen Maßnahmen, nämlich insbesondere die Heizung des Substrates 10 nur von unten (auf der nicht dekorierten Rückseite), die thermische Vermessung der gesamten Fläche des Substrates 10 und die direkte Steuerung der Aufheizung der einzelnen Segmente des Substrates 10 mittels einer Temperaturmessung mit Hilfe der IR-Kamera ist es möglich, eine optimale Steuerung des Prozesses durchzuführen.

## Patentansprüche

1. Verfahren zum Thermoverformen eines Kunststoff aufweisenden, einseitig farbig dekorierten Substrats (10) mit den Schritten:
- Einspannen eines Substrats (10) in einem Abstand von einer Form (52), die der durch thermische Verformung angestrebten Gestalt des Substrates entspricht, wobei die farbig dekorierte Seite des Substrates (10) von der Form (52) abgewandt ist,
- Erhitzen des Substrates (10) in Abhängigkeit der Geometrie der durchzuführenden Thermoverformung durch eine Vielzahl von Infrarot-Strahlern (36), die die der Form zugewandte, nicht farbig dekorierte Seite des Substrats bestrahlen, die jeweils einzelnen Segmenten des Substrats (10) zugeordnet sind und deren Strahlungsleistung gesteuert ist,
- in Eingriff bringen des erhitzten Substrats mit der Form (52), und
- Erzeugen eines Vakuums, das das Substrat (10) an die Form (52) andrückt.

2. Verfahren nach Anspruch 1,
dadurch gekennzeichnet, daß während des Erhitzens des Substrates (10) die erreichte Temperatur jedes infrarotbestrahlten Segments gemessen und mit abgelegten Soll-Werten verglichen wird, und daß die Strahlungsleistung entsprechender Infrarot-Strahler (36) zur Erzielung einer Übereinstimmung von gemessenen Temperaturwerten und den Soll-Werten geregelt wird.

3. Vorrichtung zur Durchführung des Verfahrens nach Anspruch 1, mit
- einer Form (52), die der durch thermische Verformung angestrebten Gestalt des Substrates entspricht,
- einer Vakuumquelle zur Erzeugung einer Druckdifferenz, mit der das Substrat (10) an die Form (52) andrückbar ist, und
- einer Vielzahl von Infrarot-Strahlern (36), mit denen das Substrat (10) auf einer Seite erhitzbar ist, wobei die Infrarot-Strahler (36) jeweils einzelnen Segmenten des Substrates (10) zugeordnet sind,
dadurch gekennzeichnet, daß
- die Infrarot-Strahler (36) auf der der Form (52) zugewandten, nicht farbig dekorierten Seite des Substrats (10) angeordnet sind, und
- die einzelnen Segmenten des Substrats (10) zugeordneten Infrarot-Strahler (36) mittels einer Einrichtung (60) in ihrer Strahlungsleistung variierbar sind.

4. Vorrichtung nach Anspruch 3,
dadurch gekennzeichnet, daß
- eine Infrarot-Kamera (46) zum Messen der Temperaturen einzelner Segmente des Substrates (10) während der Thermoverformung vorhanden ist, und daß
- die Einrichtung (60) die Strahlungsleistung einzelner Infrarot-Strahler (36) entsprechend den gemessenen Temperaturen der einzelnen Segmente steuert.

5. Vorrichtung nach Anspruch 4,
dadurch gekennzeichnet, daß die Infrarot-Kamera (46) und die Infrarot-Strahler (36) auf entgegengesetzten Seiten des Substrates (10) angeordnet sind.

6. Vorrichtung nach einem der Ansprüche 4 oder 5,
dadurch gekennzeichnet, daß die Infrarot-Strahler (36) zwischen dem Substrat (10) und der Form (52) auf einem verschiebbaren Schlitten (50) angeordnet sind.

## Claims

1. Method for thermoforming a plastic material containing substrate (10) having a colour decoration on one of its faces, said method comprising the steps of
clamping a substrate (10) at a distance from a form (52) which corresponds to the configuration which is intended to be given to the substrate by thermal deformation, the colour-decorated face of the substrate (10) facing away from the form (52),
heating the substrate (10) in dependance on the geometry of the thermoforming to be effected through a number of infrared radiators (36) which irradiate that face of the substrate which has no coloured decoration and faces the form, which are each associated with particular segments of the substrate (10) and the radiation performance of which is controlled,
bringing into mutual engagement the heated substrate and the form (52), and
generating a vacuum which applies the substrate (10) against the form (52).

2. Method according to claim 1,
characterized in that during the heating of the substrate (10) the temperature obtained in each of the segments exposed to infrared radiation will be measured and compared to stored set values, and in that the radiation performance of corresponding infrared radiators (36) will be controlled in order to obtain conformity between measured temperature values and the set values.

3. Apparatus for carrying out the method set forth in claim 1, said apparatus comprising
a form (52) which corresponds with the configuration to be obtained by thermal deformation of the substrate,
a vacuum source for producing a pressure differential through which the substrate (10) is capable of being applied against the form (52), and
a number of infrared radiators (36) through which the substrate (10) is capable of being heated on one side, said infrared radiators (36) being each associated with particular segments of the substrate (10),
characterized in that
the infrared radiators (36) are arranged on the side of that face of the substrate (10) which has no colour decoration and faces the form (52), and in that
the infrared radiators (36) associated with particular segments of the substrate (10) are capable of being varied in their radiation performance through an arrangement (60).

4. Apparatus according to claim 3,
characterized in that
there is an infrared camera (46) for measuring the temperatures of particular segments of the substrate (10) during the thermoforming operation, and in that
the arrangement (60) controls the radiation performance of particular infrared radiators (36) in accordance with the measured temperatures of the different segments.

5. Apparatus according to claim 4,
characterized in that the infrared camera (46) and the infra-red radiators (36) are arranged on opposite sides of the substrate (10).

6. Apparatus according to anyone of claims 4 or 5,
characterized in that the infrared radiators (36) are arranged, mounted on a slidable carriage (50), between the substrate (10) and the form (52).

## Revendications

1. Procédé pour le thermoformage d'un substrat (10) ayant une face décorée en couleur et contenant de matière plastique, procédé comportant les étapes suivantes:
- le serrage d'un substrat (10) à une distance d'une forme (52) qui correspond à la configuration du substrat devant être obtenue par déformation thermique, la face décorée en couleur du substrat (10) visant dans la direction opposée à la forme (52),
- le chauffage du substrat (10) en fonction de la géométrie du thermoformage à réaliser par une multitude de radiateurs aux rayons infrarouges (36) qui irradient la face du substrat, non décorée en couleur, visant vers la forme, qui sont associés chacun à des segments particuliers du substrat (10) et dont la puissance de rayonnement est réglée,
- la mise en prise du substrat chauffé avec la forme (52), et
- la génération d'un vide qui applique le substrat (10) contre la forme (52).

2. Procédé selon la revendication 1,
caractérisé en ce que, durant le chauffage du substrat (10), la température atteinte de chacun des segments irradiés par des rayons infrarouges sera mesurée et comparée avec des valeurs demandées mémorisées, et en ce que la puissance de rayonnement de radiateurs (36) correspondants aux rayons infrarouges sera réglée en vue d'obtenir une conformité entre des valeurs de température mesurées et les valeurs demandées.

3. Dispositif destiné à la mise en oeuvre du procédé selon la revendication 1, ledit dispositif comprenant
- une forme (52) qui correspond à la configuration du substrat devant être obtenue par déformation thermique,
- une source de vide, destinée à produire une différence de pression par laquelle le substrat (10) peut être appliqué contre la forme (52), et
- une multitude de radiateurs (36) aux rayons infrarouges, au moyen desquels le substrat (10) peut être chauffé d'un côté, les radiateurs (36) aux rayons infrarouges étant associés chacun à des segments particuliers du substrat (10), dispositif caractérisé en ce que
- les radiateurs (36) aux rayons infrarouges sont disposés du côté de la face du substrat (10) qui n'est pas décorée en couleur et vise vers la forme (52), et en ce que
- les radiateurs (36) aux rayons infrarouges qui sont associés à des segments particuliers du substrat (10) sont capables d'être variés quant à leur puissance de rayonnement au moyen d'un arrangement (60).

4. Dispositif selon la revendication 3,
caractérisé en ce qu'il existe
- un caméra à infrarouge (46) destiné à mesurer les températures de segments particuliers du substrat (10) durant le thermoformage, et en ce que
- l'arrangement (60) effectue un réglage de la puissance de rayonnement de radiateurs particuliers (36) aux rayons infrarouges en fonction des températures mesurées des différents segments.

5. Dispositif selon la revendication 4,
caractérisé en ce que le caméra à infrarouge (46) et les radiateurs 36) aux rayons infrarouges sont disposés sur des côtés opposés du substrat (10).

6. Dispositif selon une quelconque des revendications 4 ou 5,
caractérisé en ce que les radiateurs (36) aux rayons infrarouges sont disposés, montés sur un chariot mobile (50), entre le substrat (10) et la forme (52).
